Europäisches Patentamt

European Patent Office

Office européen des brevets

(19)

(11) Veröffentlichungsnummer: **0 216 387 B1**

(12) **EUROPÄISCHE PATENTSCHRIFT**

(45) Veröffentlichungstag der Patentschrift: **27.01.93**

(51) Int. Cl.⁵: **C08F 226/02**, D21H 17/34, C08F 8/12

(21) Anmeldenummer: **86113228.0**

(22) Anmeldetag: **25.09.86**

(54) **Verfahren zur Herstellung von Vinylamin-Einheiten enthaltenden wasserlöslichen Copolymerisaten und deren Verwendung als Nass- und Trockenverfestigungsmittel für Papier.**

(30) Priorität: **26.09.85 DE 3534273**

(43) Veröffentlichungstag der Anmeldung:
**01.04.87 Patentblatt 87/14**

(45) Bekanntmachung des Hinweises auf die
Patenterteilung:
**27.01.93 Patentblatt 93/04**

(84) Benannte Vertragsstaaten:
**AT BE CH DE FR GB IT LI NL SE**

(56) Entgegenhaltungen:
**FR-A- 2 076 966**
**US-A- 3 212 972**
**US-A- 3 702 800**
**US-A- 3 715 336**
**US-A- 4 238 579**

(73) Patentinhaber: **BASF Aktiengesellschaft**
**Carl-Bosch-Strasse 38**
**W-6700 Ludwigshafen(DE)**

(72) Erfinder: **Pfohl, Sigberg, Dr.**
**Am Maulbeerstueck 14**
**W-6720 Speyer(DE)**
Erfinder: **Kroener, Michael, Dr.**
**Eislebener Weg 8**
**W-6800 Mannheim 31(DE)**
Erfinder: **Hartmann, Heinrich, Dr.**
**Weinheimer Strasse 46**
**W-6703 Limburgerhof(DE)**
Erfinder: **Denzinger, Walter**
**Wormser Landstrasse 65**
**W-6720 Speyer(DE)**

EP 0 216 387 B1

## Beschreibung

Aus der US-PS 4 421 602 sind partiell verseifte, wasserlösliche Polymerisate des N-Vinylformamids bekannt, die N-Vinylformamid-Einheiten und Vinylamin-Einheiten enthalten. Die Polymerisate werden als Mittel zur Erhöhung der Flockung, Retention und Entwässerungsgeschwindigkeit bei der Herstellung von Papier verwendet.

Aus der US-PS 4 255 548 sind Ethylen-Vinylamin-Copolymerisate bekannt, die durch Copolymerisation von Ethylen mit N-Vinylformamid und vollständige Abspaltung von Formylgruppen aus dem Copolymerisat durch Einwirkung von Salzsäure erhalten werden. Derartige Polymerisate sind beispielsweise Flockungsmittel für in Wasser suspendierte feinteilige Stoffe.

Aus der US-PS 2 721 140 ist bekannt, Polyvinylaminhydrochlorid als Hilfsmittel bei der Herstellung von Papier zu verwenden, wobei man insbesondere Papier mit hoher Naßfestigkeit erhält. Das so behandelte Papier besitzt jedoch eine hohe Vergilbungsneigung.

Der vorliegenden Erfindung liegt die Aufgabe zugrunde, zur Erhöhung der Trocken- und Naßfestigkeit von Papier Mittel zur Verfügung zu stellen, die die Weiße des Papiers möglichst nicht nachteilig beeinflussen.

Die Aufgabe wird erfindungsgemäß gelöst durch die Verwendung von Copolymerisaten, die Vinylamin-Einheiten einpolymerisiert enthalten und die durch Copolymerisieren von

(a) 95 bis 10 Mol.-% N-Vinylformamid mit

(b) 5 bis 90 Mol.-% eines ethylenisch ungesättigten Monomeren aus der Gruppe Vinylacetat, Vinylpropionat, der $C_1$- bis $C_4$-Alkylvinylether, N-Vinylpyrrolidon, Acrylamid, Methacrylamid, Acrylnitril, Methacrylnitril, sowie der Ester der Acrylsäure und Methacrylsäure, die sich von Alkoholen mit 1 bis 18 Kohlenstoffatomen ableiten,

und anschließende Abspaltung von 30 bis 100 Mol.-% der Formylgruppen aus den Copolymerisaten erhältlich sind, bei der Herstellung von Papier zu Erhöhung der Trocken- und Naßfestigkeit des Papiers. Die Copolymerisate werden in einer Menge von 0,1 bis 5 Gew.-%, bezogen auf trockene Fasern, dem Papierstoff vor der Blattbildung zugesetzt oder in der vorstehend angegebenen Menge als wäßrige Lösung auf die Oberfläche des Papiers aufgetragen.

Insbesondere eignen sich dafür wasserlösliche Copolymerisate aus a) 95 bis 10 Mol-% N-Vinylformamid und b) 5 bis 90 Mol-% Vinylacetat und/oder Vinylpropionat, aus denen 30 bis 100 Mol-% der Formylgruppen aus den Einheiten a) 30 bis 100 Mol-% der Acetyl- bzw. Propionyl-Gruppen aus den Einheiten b) des Copolymerisats abgespalten sind.

N-Vinylformamid ($CH_2 = CH-NH-CHO$) kann beispielsweise nach dem Verfahren der DE-AS 12 24 304 hergestellt werden. Es kann nach den bekannten Polymerisationsverfahren copolymerisiert werden. Als Comonomere (b) kommen hierfür ethylenisch ungesättigte Monomere aus der Gruppe Vinylacetat, Vinylpropionat, der $C_1$- bis $C_4$-Alkylvinylether, der Ester, Nitrile und Amide von Acrylsäure und Methacrylsäure in Betracht. Geeignete Alkylvinylether sind beispielsweise Methylvinylether, Ethylvinylether, Isopropylvinylether, n-Propylvinylether, tert. Butylvinylether sowie n- und Isobutylvinylether. Zu den Monomeren der Gruppe (b) gehören außerdem Acrylamid, Methacrylamid, Acrylnitril, Methacrylnitril sowie Ester der Acrylsäure und Methacrylsäure, die sich von Alkoholen mit 1 bis 18 Kohlenstoffatomen ableiten. Geeignete Alkohole für die Herstellung dieser Ester sind beispielsweise Methanol, Ethanol, Propanol, Isopropanol, n-, Iso-und tert. Butylalkohol, Neopentylalkohol, 2-Ethylhexanol, n-Octanol, Dodekanol, Palmithylalkohol und Stearylalkohol. Vorzugsweise verwendet man aus der Gruppe der Ester diejenigen, die sich von Alkoholen mit 1 bis 4 Kohlenstoffatomen ableiten. Darunter sind auch solche Ester zu verstehen, die durch Veresterung eines 2-wertigen $C_2$- bis $C_4$-Alkohols mit Acrylsäure bzw. Methacrylsäure im Molverhältnis 1:1 hergestellt werden. Nämlich Hydroxyethylacrylat, Hydroxyethylmethacrylat, Hydroxypropylacrylate, Hydroxyproylmethacrylate, Hydroxybutylacrylate und Hydroxybutylmethacrylate. Als Monomer der Gruppe (b) kommt außerdem N-Vinylpyrrolidon in Betracht. Die Monomeren der Gruppe (b) können entweder alleine oder auch in Mischung mit dem N-Vinylformamid copolymerisiert werden. Die Copolymerisate enthalten 95 bis 10, vorzugsweise 60 bis 40 Mol-% N-Vinylformamid und 5 bis 90, vorzugsweise 40 bis 60 Mol-% mindestens eines Monomeren der Gruppe (b) einpolymerisiert, wobei die Summe der Molprozente in den Copolymerisaten immer 100 beträgt. Besonderes Interesse besitzen Copolymerisate aus N-Vinylformamid und folgenden Monomeren der Gruppe (b): Vinylacetat, Vinylpropionat, $C_1$- bis $C_4$-Alkylvinylether und N-Vinylpyrrolidon.

Die Monomeren (a) und (b) werden unter Verwendung radikalischer Polymerisationsinitiatoren, z.B. von Peroxiden, Hydroperoxiden, sogenannten Redoxkatalysatoren oder von in Radikale zerfallenden Azo-Verbindungen polymerisiert. Die Polymerisation wird vorteilhaft in einem Lösungs- bzw. Verdünnungsmittel in dem Temperaturbereich von 30 bis 140 °C durchgeführt, wobei unter Normaldruck, vermindertem oder auch unter erhöhtem Druck gearbeitet werden kann. Polymerisate mit einem hohen Molekulargewicht erhält man, wenn man die Polymerisation in Wasser durchführt. Dies kann beispielsweise für die Herstellung wasserlöslicher Polymerisate in wäßriger Lösung, als Wasser-in-Öl-Emulsion oder nach dem Verfahren der umgekehrten Suspensionspolymerisation erfolgen. Zur Herstellung wasserunlöslicher Polymerisate bedient man sich der Methoden der Öl-in-Wasser-Emulsionspolymerisation und der Suspensionspolymerisation. Die Polymerisationsinitiatoren werden in den üblichen Mengen eingesetzt, z.B. 0,1 bis 5,0 Gew.%, bezogen auf die Monomeren. Besonders geeignete Polymerisationsinitiatoren sind wasserlösliche Azo-Verbindungen, z.B. 2,2'-Azo-bis-(2-Amidinopropan)-Hydrochlorid und 4,4'-Azo-bis-(4'-Cyan-Pentansäure).

Das Molekulargewicht der Copolymerisate kann mit Hilfe von Polymerisationsreglern und Kettenverlängerern beeinflußt werden. Geeignete Polymerisationsregler sind beispielsweise Alkohole, wie Methanol, Ethanol, n- und Isopropanol, Azeton, Hydroxylammoniumsalze, chlorierte Kohlenwasserstoffe und Thioverbindungen, wie Thioglykolsäure, 2-Mercaptoethanol und Dodecylmercaptan. Als Kettenverlängerer kommen z.B. mehrfunktionelle Monomere in Betracht, wie Methylen-bis-acrylamid, Divinylethylenharnstoff, Pentaerythrittriallylether und Divinylbenzol. Regler und Kettenverlängerer werden gegebenenfalls in Mengen von 0,001 bis 10, vorzugsweise 0,01 bis 5 Gew.-%, bezogen auf die eingesetzten Monomeren, verwendet. Polymerisate eines niedrigen Molekulargewichts können auch dadurch hergestellt werden, daß man die Polymerisation beispielsweise in Isopropanol unter Verwendung von darin löslichen Polymerisationsinitiatoren durchführt. Der pH-Wert bei der Polymerisation - sofern die Polymerisation in einem wäßrigen Medium durchgeführt wird, liegt in dem Bereich von 4 bis 10, vorzugsweise 6 bis 8. Die Menge der Verdünnungs- bzw. Lösemittel, die bei der Polymerisation verwendet werden, wird so gewählt, daß Polymerisatlösungen, Suspensionen oder Dispersionen anfallen, deren Feststoffgehalt 1 bis 60, vorzugsweise 3 bis 30 Gew.% beträgt.

Die oben beschriebenen Copolymerisate werden durch Einwirkung von Säuren oder Basen dahingehend modifiziert, daß infolge dieser Behandlung die Formylgruppe aus dem einpolymerisiertem N-Vinylformamid unter Bildung von Vinylamingruppen abgespalten wird. Die Abspaltung der Formylgruppen aus dem Copolymerisat erfolgt - wie in der US-PS 4 421 602 beschrieben ist - vorzugsweise mit Salzsäure oder Natronlauge und kann in dem Temperaturbereich von 20 bis 100°C durchgeführt werden. Behandelt man die Formylgruppen enthaltenden Copolymerisate unter Ausschluß von Wasser mit Chlorwasserstoff oder Bromwasserstoff, so entsteht unter Abspaltung von Kohlenmonoxid aus der N-Formylgruppe des Copolymerisats eine Aminogruppe. Bei der Einwirkung von Säuren oder Basen auf Copolymerisate aus N-Vinylformamid und Acrylnitril, Methacrylnitril, N-Vinylpyrrolidon und $C_1$- bis $C_4$-Alkylvinylethern werden die Monomeren der Gruppe (b) im Copolymerisat kaum chemisch verändert, dagegen erfolgt die Hydrolyse des einpolymerisierten N-Vinylformamids zu 30 bis 100, vorzugsweise 70 bis 95 Mol-%. Von besonderem Interesse sind Copolymerisate aus N-Vinylformamid und Vinylacetat und/oder Vinylpropionat. So erhält man beispielsweise aus diesen Copolymerisaten durch Einwirkung von Salzsäure bei einer Temperatur von 50°C Produkte, bei denen das einpolymerisierte Acetat bzw. Vinylpropionat nicht verseift ist, dagegen das einpolymerisierte N-Vinylformamid zu 30 bis 100 Mol-% verseift werden kann. Behandelt man Copolymerisate aus N-Vinylformamid und Vinylacetat bzw. Vinylpropionat bei einer Temperatur von 50°C mit Natronlauge, so werden die Formylgruppen aus dem einpolymerisierten N-Vinylformamid als auch die Acetyl- bzw. Propionylgruppen aus den einpolymerisierten Vinylacetat bzw. Vinylpropionat in etwa gleichem Maße aus dem Copolymerisat abgespalten.

Die verseiften Copolymerisate, die durch Verseifung von 100 bis 30, vorzugsweise 70 bis 95 % der einpolymerisierten N-Vinylformamid-Einheiten in Vinylamin-Einheiten überführt worden sind, und einen K-Wert nach Fikentscher von 50 bis 250, vorzugsweise 100 bis 200 haben, werden bei der Herstellung von Papier zur Erhöhung der Trocken- und Naßfestigkeit des Papiers verwendet. Die verseiften Copolymerisate werden dabei vorzugsweise in wäßriger Lösung eingesetzt und dem Papierstoff vor der Blattbildung in einer Menge von 0,1 bis 5 Gew.%, bezogen auf trockenen Faserstoff zugesetzt. Copolymerisate, in denen das N-Vinylformamid zu 100 % veseift ist, und bei denen das Monomer (b) Vinylacetat bzw. N-Vinylpyrrolidon ist, werden bei der Papierherstellung vorzugsweise dem Papierstoff zugesetzt und bewirken eine starke Erhöhung der Naßfestigkeit des Papiers. Die wäßrigen Polymerlösungen können auch auf die Oberfläche des Papiers aufgetragen werden, wobei die anzuwendenden Mengen 0,1 bis 5, vorzugsweise 0,25 bis 1 Gew.%, bezogen auf trockene Fasern, betragen. Die wäßrigen Lösungen der Copolymerisate sind bei allen bekannten Papier-, Pappe- und Kartonqualitäten wirksam, z.B. bei der Herstellung von Schreib-, Druck- und Verpackungspapieren. Die Papiere bzw. Pappen und Kartons können aus einer Vielzahl von Fasermaterialien hergestellt werden, beispielsweise aus Sulfit- oder Sulfat-Zellstoff (gebleicht oder ungebleicht, Holzschliff oder Altpapier oder Mischungen der genannten Faserarten bestehen). Der pH-Wert der Stoffsuspension beträgt 4 bis 9, vorzugsweise 6 bis 8. Die obenbeschriebenen Copolymerisate werden vorzugsweise in einer Menge von 0,25 bis 1 Gew.%, bezogen auf trockenen Faserstoff, der Papierstoffsuspension vor der Blattbildung zugesetzt und führen zu einer Erhöhung der Trocken- und Naßfestigkeit des Papiers.

Die in den folgenden Beispielen angegebenen Teile sind Gewichtsteile, die Prozentangaben beziehen sich auf das Gewicht der Stoffe. Der K-Wert der Polymerisate wurde nach H. Fikentscher, Cellulose-Chemie 13, 58-64 und 71-74 (1932) bei einer Temperatur von 25°C in 5%igen wäßrigen Kochsalzlösungen bei einer Polymerkonzentration von 0,5 Gew.% bestimmt; dabei bedeutet K = k.10$^3$.

Die Papierblätter wurden in einem Rapid-Köthen-Laborblattbildner hergestellt. Die Trockenreißlänge wurde gemäß DIN 53112, Blatt 1 und die Naßreißlänge gemäß DIN 53112, Blatt 2, bestimmt.

Die Laugenfestigkeit wurde in der gleichen Weise bestimmt wie die Naßfestigkeit, wobei anstelle von Wasser eine 1%ige Natronlaugelösung zur Tränkung der Papiere (5 Minuten bei 50°C) verwendet wurde. Die Weiße der Papierblätter wurde mit Hilfe eines Reflexionsfotometers (Elrefo-Gerät) nach DIN 53145 bestimmt.

Herstellung der Copolymerisate

Beispiel 1

In einem 2-Liter-Pilotrührwerk, das mit Thermometer, Kühler, Stickstoffeinleitungsrohr und 2 Tropftrichtern versehen ist, wird eine Mischung aus 600 g Wasser, 3 g eines Copolymerisats aus Styrol und Maleinsäureanhydrid im Molverhältnis 1 : 1 vom Molgewicht (Gewichtsmittel) 150 000 in Form der 30%igen wäßrigen Lösung des Na-Salzes, 1,5 g Natriumpyrophosphat, 27 g Vinylacetat, 18 g N-Vinylformamid und 0,1 g 2,2-Azo-bis(2,4-dimethylvaleronitril) auf eine Temperatur von 65°C erhitzt. Nachdem die Polymerisation angesprungen ist, gibt man innerhalb von 3 Stunden 243 g Vinylacetat, 0,9 g 2,2-Azo-bis(2,4-Dimethylvaleronitril) und 162 g N-Vinylformamid zu und hält die Temperatur bei 65°C. Nach Zugabe der Monomeren wird die Mischung noch 2 Stunden bei 75°C gehalten, dann mit 300 g Wasser verdünnt und nach Zugabe von 0,2 g 2,2-Azo-bis-Isobutyrolnitril noch 3 Stunden bei 65 bis 82°C nachpolymerisiert. Danach setzt man nochmals 0,2 g 2,2 Azo-bis-Isobutyronitril zu und erhitzt die Mischung bis zum Sieden, wobei die die max. Innentemperatur zuletzt 98°C beträgt. Es entsteht eine hochviskose, homogene weiße Paste eines Copolymerisats aus 60 % Vinylacetat und 40 % N-Vinylformamid.

Hydrolyse

In einem Kolben, der mit einem Rührer versehen ist, wird das obenbeschriebene Copolymerisat aus 40 % N-Vinylformamid und 60 % Vinylacetat in Form einer 20%igen wäßrigen Suspension vorgelegt und 38%ige Salzsäure zugetropft. Man verwendet 2 Mol Salzsäure pro Mol N-Vinylformamid-Anteil im Copolymerisat. Die Hydrolyse wird bei einer Temperatur von 60°C innerhalb von 6 Stunden durchgeführt. Dabei hydrolysieren 100 Mol-% des einpolymerisierten N-Vinylformamid und 90 Mol-% des einpolymerisierten Vinylacetats. Man erhält eine wäßrige Lösung, die bei einer Temperatur von 20°C eine Viskosität von 600 mPas hat. Der Feststoffgehalt der Lösung beträgt 12,2 Gew.%, der K-Wert des Copolymerisats beträgt 100.

Beispiel 2

Nach der in Beispiel 1 gegebenen Vorschrift wird ein Copolymerisat aus 60 % N-Vinylformamid und 40 % Vinylacetat hergestellt, das als hochviskose, weiße Paste anfiel. Die Polymerkonzentration der Paste betrug 26,2 %. Die Paste wurde dann in einem Kolben, der mit einem Rührer versehen war, mit 1 Mol einer 38%igen Salzsäure/Mol N-Vinylformamidanteil im Copolymerisat versetzt und anschließend 4 Stunden auf eine Temperatur von 60°C erwärmt. Nach dieser Zeit waren 90 Mol-% des einpolymerisierten N-Vinylformamid und 80 Mol-% des einpolymerisierten Vinylacetats hydrolysiert. Die Viskosität der so erhaltenen 17,9 %igen Polymerlösung betrug 3 750 mPas; der K-Wert des Copolymerisates 150.

Anwendungstechnische Beispiele

Beispiel 3

Aus 50 % Fichtensulfitzellstoff und 50 % Buchensulfitzellstoff wurde eine 0,5%ige Stoffsuspension in Wasser hergestellt. Der pH-Wert der Suspension betrug 7,5, der Mahlgrad 30°SR. Die Stoffsuspension wurde in vier gleiche Teile geteilt und jeweils unter folgenden Bedingungen zu Blättern einer Flächenmasse von 80 g/m$^2$ verarbeitet:

a) Der Stoffsuspension wurde nichts zugesetzt.

b) Der Stoffsuspension wurde 1 %, jeweils bezogen auf die Feststoffe, einer wäßrigen Lösung eines handelsüblichen Neutralnaßfestharzes auf Basis eines Umsetzungsproduktes von Epichlorhydrin und einem Polyamidoamin aus Diethylentriamin und Adipinsäure zugesetzt. Das Neutralnaßfestharz wurde gemäß Beispiel 1 der US-PS 2 926 116 hergestellt.

c) Der Stoffsuspension wurde 1 %, jeweils bezogen auf die Feststoffe, einer wäßrigen Lösung eines Polyvinylaminhydrochlorids (K-Wert 95) gemäß US-PS 2 721 140 zugesetzt.

d) Der Stoffsuspension wurde 1 %, jeweils bezogen auf die Feststoffe, des gemäß Beispiel 1 erhaltenen hydrolysierten Copolymerisats zugesetzt.

Von den vier gemäß a) bis d) erhaltenen Blättern wurde die Trockenreißlänge, die Naßreißlänge und die Weiße geprüft. Die Ergebnisse sind in Tabelle 1 zusammengefaßt.

### Tabelle 1

|  | a) | b) | c) | d) |
|---|---|---|---|---|
| Trockenreißlänge (m) |  |  |  | (erfindungsgemäß) |
|  | 2 380 | 2 990 | 2 850 | 3 100 |
| Naßreißlänge (m) Papier ungealtert | 0 | 720 | 670 | 810 |
| Naßreißlänge (m) Papieralterung 5 min 110°C | 0 | 920 | 850 | 940 |
| Weiße (% Remissionswert) | 87,0 | 79,4 | 75,2 | 80,4 |

### Beispiel 4

Aus 100 % Fichtensulfitzellstoff wurde eine 0,5%ige Stoffsuspension in Wasser hergestellt. Der pH-Wert der Suspension betrug 7,5, der Mahlgrad 35° SR. Die Stoffsuspension wurde in vier gleiche Teile geteilt und jeweils unter folgenden Bedingungen zu Blättern einer Flächenmasse von 80 g/m$^2$ verarbeitet:

a) Der Stoffsuspension wurde nichts zugesetzt.

b) Der Stoffsuspension wurde 1 %, jeweils bezogen auf die Feststoffe, einer wäßrigen Lösung eines handelsüblichen Neutralnaßfestharzes auf Basis eines Umsetzungsproduktes von Epichlorhydrin und einem Polyamidoamin aus Diethylentriamin und Adipinsäure zugesetzt. Das Neutralnaßfestharz wurde gemäß Beispiel 1 der US-PS 2 926 116 hergestellt.

c) Der Stoffsuspension wurde 1 %, jeweils bezogen auf die Feststoffe, einer wäßrigen Lösung eines Polyvinylamin-hydrochlorids (K-Wert 95) gemäß der Lehre der US-PS 2 721 140 zugesetzt (pH-Wert mit Natronlauge auf pH 6% eingestellt).

d) Der Stoffsuspension wurde 1 %, jeweils bezogen auf die Feststoffe des hydrolysierten Copolymerisats zugesetzt, das im Beispiel 2 beschrieben ist.

Von den 4 gemäß a) bis d) erhaltenen Blättern wurde die Trockenreißlänge, die Naßreißlänge, die Laugenfestigkeit und die Weiße geprüft. Die Ergebnisse sind in Tabelle 2 zusammengefaßt.

Tabelle 2

| | a) | b) | c) | d) |
|---|---|---|---|---|
| Trockenreißlänge (m) | | | | (erfindungsgemäß) |
| | 4 350 | 4 950 | 5 300 | 5 450 |
| Naßreißlänge (m) Papier ungealtert | 0 | 940 | 950 | 1 100 |
| Naßreißlänge (m) Papieralterung 5 min 110°C | 0 | 1 350 | 1 120 | 1 300 |
| Laugenfestigkeit (m) 1 % Natronlauge 5 min 50°C Papier ungealtert | 0 | 690 | 890 | 970 |
| Laugenfestigkeit (m) 1 % Natronlauge 5 min 50°C Papieralterung 5 min 110°C | 0 | 840 | 975 | 1 090 |
| Weiße | 79,7 | 72,0 | 69,5 | 72,5 |

**Patentansprüche**

1. Verwendung von Copolymerisaten, die Vinylamin-Einheiten einpolymerisiert enthalten und die durch Copolymerisieren von
    (a) 95 bis 10 Mol.-% N-Vinylformamid mit
    (b) 5 bis 90 Mol.-% eines ethylenisch ungesättigten Monomeren aus der Gruppe Vinylacetat, Vinylpropionat, der $C_1$- bis $C_4$-Alkylvinylether, N-Vinylpyrrolidon, Acrylamid, Methacrylamid, Acrylnitril, Methacrylnitril, sowie der Ester der Acrylsäure und Methacrylsäure, die sich von Alkoholen mit 1 bis 18 Kohlenstoffatomen ableiten,
    und anschließende Abspaltung von 30 bis 100 Mol.-% der Formylgruppen aus den Copolymerisaten erhältlich sind, bei der Herstellung von Papier zur Erhöhung der Trocken- und Naßfestigkeit des Papiers.

2. Verwendung nach Anspruch 1, dadurch gekennzeichnet, daß man Copolymerisate einsetzt, die durch Copolymerisieren von
    (a) 95 bis 10 Mol.-% N-Vinylformamid
    (b) 5 bis 90 Mopl.-% Vinylacetat und/oder Vinylpropionat,
    und anschließende Abspaltung von 30 bis 100 Mol.-% der Formylgruppen aus den einpolymerisierten Einheiten (a) und 30 bis 100 Mol.-% der Acetyl- bzw. Propionylgruppen aus den einpolymerisierten Einheiten (b) des Copolymerisats erhältlich sind.

3. Verwendung nach Anspruch 1 oder 2, dadurch gekennzeichnet, daß man die Copolymerisate in einer Menge von 0,1 bis 5 Gew.-%, bezogen auf trockene Fasern, dem Papierstoff vor der Blattbildung zusetzt.

4. Verwendung nach Anspruch 1 oder 2, dadurch gekennzeichnet, daß man die Copolymerisate in einer Menge von 0,1 bis 5 Gew.-%, bezogen auf trockene Fasern, auf die Oberfläche des Papiers aufträgt.

**Claims**

1. Use of a copolymer which contains copolymerized vinylamine units and is obtainable by copolymerizing
    a) from 95 to 10 mol% of N-vinylformamide with

6

b) from 5 to 90 mol% of an ethylenically unsaturated monomer from the group consisting of vinyl acetate, vinyl propionate, the $C_1$-$C_4$-alkyl vinyl ethers, N-vinylpyrrolidone, acrylamide, methacrylamide, acrylonitrile, methacrylonitrile, and the esters of acrylic acid and methacrylic acid which are derived from alcohols having from 1 to 18 carbon atoms,

and then eliminating from 30 to 100 mol% of the formyl groups from the copolymer in papermaking to enhance the dry and wet strength of the paper.

2. Use as claimed in claim 1, wherein the copolymer used is obtainable by copolymerizing
   a) from 95 to 10 mol% of N-vinylformamide and
   b) from 5 to 90 mol% of vinyl acetate and/or vinyl propionate,
   and then eliminating from 30 to 100 mol% of the formyl groups from the copolymerized units (a) and from 30 to 100 mol% of the acetyl or propionyl groups from the copolymerised units (b) of the copolymer.

3. Use as claimed in claim 1 or 2, wherein the copolymer is added to the paper stock in an amount of from 0.1 to 5% by weight, based on dry fiber, before sheet formation.

4. Use as claimed in claim 1 or 2, wherein the copolymer is applied to the surface of the paper in an amount of from 0.1 to 5% by weight, based on dry fiber.

**Revendications**

1. Utilisation de copolymères, qui contiennent des unités vinylamine incorporées par polymérisation et que l'on peut obtenir par la copolymérisation
   (a) de 95 à 10% molaires de N-vinylamide avec
   (b) 5 à 90% molaires d'un monomère éthyléniquement insaturé, appartenant au groupe de l'acétate de vinyle, du propionate de vinyle, des éthers alkyl($C_1$-$C_4$)vinyliques, de la N-vinylpyrrolidone et de l'acrylamide, du méthacrylamide, de l'acrylonitrile, du méthacrylonitrile, comme aussi des esters de l'acide acrylique et de l'acide méthacrylique qui proviennent d'alcools comportant de 1 à 18 atomes de carbone
   et la séparation subséquente de 30 à 100% molaires des radicaux formyle d'avec les copolymères,

   au cours de la fabrication du papier, en vue de l'élévation de la résistance à l'état sec et à l'état mouillé ou humide du papier.

2. Utilisation suivant la revendication 1, caractérisé en ce que l'on met en oeuvre des copolymères que l'on obtient par la copolymérisation
   (a) de 95 à 10% molaires de N-vinylformamide,
   (b) de 5 à 90% molaires d'acétate de vinyle et/ou de propionate de vinyle
   et la séparation subséquente de 30 à 100% molaires des radicaux vinyle d'avec les unités (a) incorporées par polymérisation et de 30 à 100% molaires des radicaux cétyle ou propionyle d'avec les unités (b) incorporées par polymérisation, du copolymère.

3. Utilisation suivant la revendication 1 ou 2, caractérisée en ce que l'on ajoute les copolymères à la pâte à papier avant la formation de la feuille en une proportion de 0,1 à 5% en poids, par rapport aux fibres sèches.

4. Utilisation suivant la revendication 1 ou 2, caractérisée en ce que l'on dépose les copolymères sur la surface du papier en une proportion de 0,1 à 5% en poids par rapport aux fibres sèches.